# EUROPEAN PATENT SPECIFICATION

(11) **EP 3 470 697 B1**
(45) Date of publication and mention of the grant of the patent: **19.02.2020**
(21) Application number: 18199758.6
(22) Date of filing: 11.10.2018
(51) Int. Cl.: F16C 19/06, F16C 33/38, F16C 33/41

(54) **ROLLING BEARING**
WÄLZLAGER
ROULEMENT À BILLES

(30) Priority: 11.10.2017 JP 2017197550
(43) Date of publication of application: 17.04.2019
(73) Proprietor: NTN Corporation, Osaka-shi, Osaka 550-0003 (JP)
(72) Inventor: SUZUKI, Takayuki, Kuwana-shi, Mie 511-8678 (JP)
(74) Representative: Grünecker Patent- und Rechtsanwälte PartG mbB

(56) References cited:
- EP-A1- 2 530 341
- EP-A1- 2 708 767
- DE-T5-112015 005 820
- US-A1- 2013 114 921

## Description

### TECHNICAL FIELD

This invention relates to a rolling bearing including a retainer.

### BACKGROUND ART

A rolling bearing typically includes a plurality of rolling elements disposed between inner and outer raceways, and a retainer that maintains the circumferential distances between the rolling elements. The retainer has pockets which are equal in number to the rolling elements and circumferentially equidistantly spaced apart from each other. Pocket gaps are defined between the respective pockets and the rolling elements in the pockets. The pocket gaps determine the distances by which the respective rolling elements 30 are freely circumferentially movable relative to the retainer 40. The pocket gaps are the same size.

During operation of the bearing, the rolling elements move forward and backward relative to the retainer, thus colliding against the retainer, when the rolling elements move into loaded regions and unloaded regions of the bearing. The contact force between the retainer and the rolling elements may strengthen due to the retainer being deformed by centrifugal force that acts on the rotating retainer. These factors all contribute to increased forces applied to the retainer from the rolling elements. Thus, in order to use the bearing in an environment in which the bearing is rotated at high speed, or vibrated violently, or in any other harsh condition, sufficient strength may be required for the retainer. However, it is difficult to provide a resin retainer that meets this requirement because resin retainers are typically lower in mechanical strength than metal retainers.

For example, the below-identified Patent Document 1 proposes a thrust bearing for use in e.g., a hydraulic continuously variable transmission which includes a retainer having pocket gaps that are 2-5% of the diameter of the rolling elements to improve the shock-absorbing capacity of the retainer, thereby preventing damage to the retainer.

To prevent damage to the retainer, it is also effective to design the retainer so as to have an increased sectional area and thus have increased mechanical strength, or to form the retainer from a resin having a low elastic modulus so as to disperse stress.

### PRIOR ART DOCUMENT

### PATENT DOCUMENT

Patent Document 1: JP 2013-64495A

### SUMMARY OF THE INVENTION

### OBJECT OF THE INVENTION

However, in order to improve durability by increasing the sectional area of the retainer or by dispersing stress, it is necessary to evaluate the strength of the retainer while taking into consideration the use condition of the bearing, especially the load on, and the revolving speed of, the bearing. That is, the durability of the retainer improves only if the bearing is used in a predictable environment. In other words, if the bearing is used outside the predictable environment, such as in a high-revolution environment, which is harsh for the retainer, or in an unknown use environment, it may be difficult to prevent damage to the retainer.

It is an object of the present invention to provide a rolling bearing including a retainer which is made of a resin composition and which is less likely to be damaged even if an unexpected load is applied to the bearing or the bearing is used at an unexpected revolving speed.

### MEANS FOR ACHIEVING THE OBJECT

In order to achieve this object, the present invention provides a rolling bearing comprising a plurality of rolling elements disposed between an inner raceway and an outer raceway, and a retainer made of a resin composition, and configured to retain circumferential distances between the rolling elements, wherein the retainer has a plurality of pockets each receiving a respective one of the rolling elements, and a circumferential pocket gap is defined between each of the pockets and a corresponding one of the rolling elements, and wherein the sum of the pocket gaps is smaller than the elongation at break of the resin composition.

Since the sum of the pocket gaps is smaller than the elongation at break of the resin composition, even when some of the pocket gaps decrease or disappear due to deformation of the retainer as a result of the rolling elements moving forward or backward relative to the retainer, no excessive loads are applied to the retainer from the rolling elements. Thus, the actual elongation of the resin composition forming the retainer never reaches the elongation at break of the resin composition. Thus, it is possible to prevent damage to the retainer by choosing right materials for the retainer and by properly determining the pocket gaps, without considering the load on, and the number of revolutions of, the bearing. This means that it is possible to prevent damage to the retainer even if the rolling bearing is used in an unexpected environment regarding the load and the number of revolutions.

Preferably, the resin composition is higher in compressive strength than in tensile strength, because by choosing such a resin composition, it is not necessary to consider the resistance to compression and only necessary to consider the resistance to tensile force.

For example, the resin composition preferably contains a synthetic resin selected from a polyamide, polyphenylene sulfide, and polyetheretherketone, because these synthetic resins are especially high in heat resistance and oil resistance among synthetic resins that are usable as materials for bearing retainers, and thus allow the rolling bearing to be used in a wider range of environments regarding the temperature conditions and the kind of lubricating oil used.

Preferably, the retainer contains 10-40% by mass, based on the entire retainer, of glass fibers or carbon fibers. As the resin composition forming the entire retainer, it is possible to use a fiber-reinforced resin composition. If ordinary glass fibers or carbon fibers are used in such a fiber-reinforced resin composition, it is possible to set the elongation at break of the resin composition to a preferable value if the content of such fibers is 10-40% by mass of the entire retainer.

Preferably, the retainer includes an annular portion continuously extending over the entire circumference, and a plurality of crossbars extending to one side from the annular portion, the pockets are defined between the respective circumferentially adjacent pairs of crossbars, the annular portion has regions that border the respective pockets and have minimum axial wall thicknesses, and the glass fibers or carbon fibers in said regions are all oriented in the circumferential direction. With this arrangement, since the reinforcing fibers are oriented parallel to the direction in which the retainer is deformed at the minimum wall thickness portions, where the retainer is most likely to break, the formation of weld portions is prevented during injection molding.

The present invention thus provides a rolling bearing of which the retainer is not damaged even if the bearing is used in an unexpected environment regarding the load on, and the number of revolutions of, the bearing.

### BRIEF DESCRIPTION OF THE DRAWINGS

Fig. 1 is a conceptual developed view of a retainer embodying the present invention, showing pocket gaps in the retainer.
Fig. 2 is a conceptual developed view of the retainer shown in Fig. 1 when the retainer is deformed.
Fig. 3 is a vertical sectional front view of a rolling bearing including the retainer of Fig. 1.

### EMBODIMENT

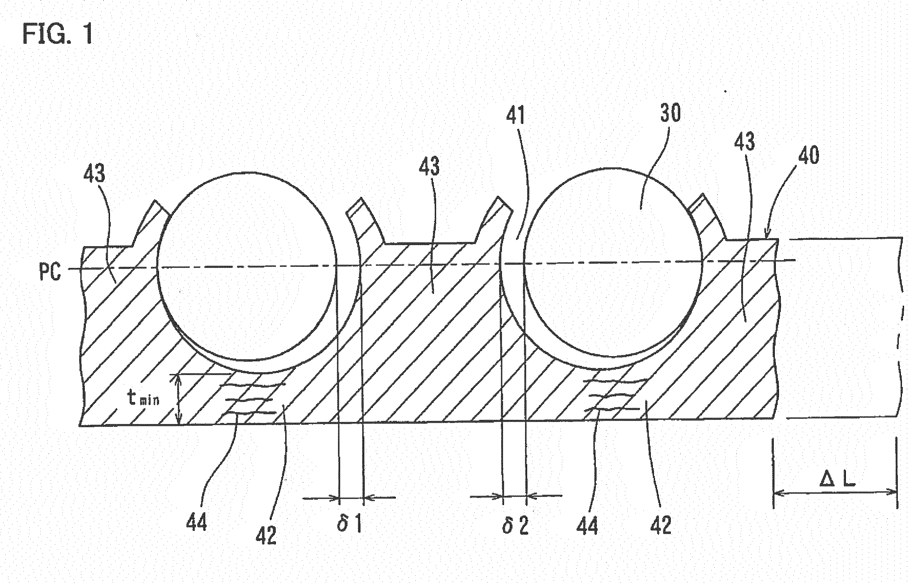

Figs. 1-3 show a rolling bearing embodying the present invention, which includes an inner race 10, an outer race 20, and a plurality of rolling elements 30 disposed between a raceway 11 of the inner race 10 and a raceway 21 of the outer race 20. A retainer 40 maintains the circumferential distances between the adjacent rolling elements. The retainer 40 has pockets 41 which are equal in number to the rolling elements and circumferentially equidistantly spaced apart from each other.

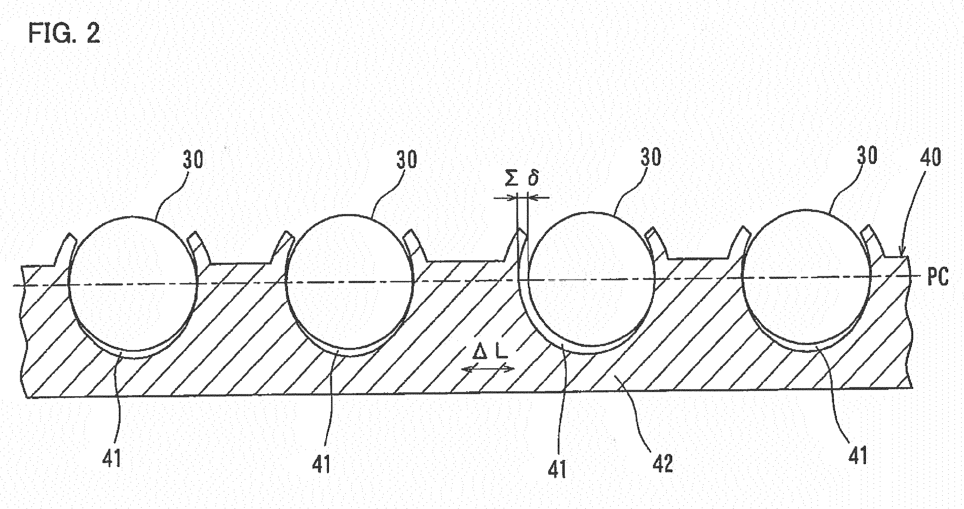

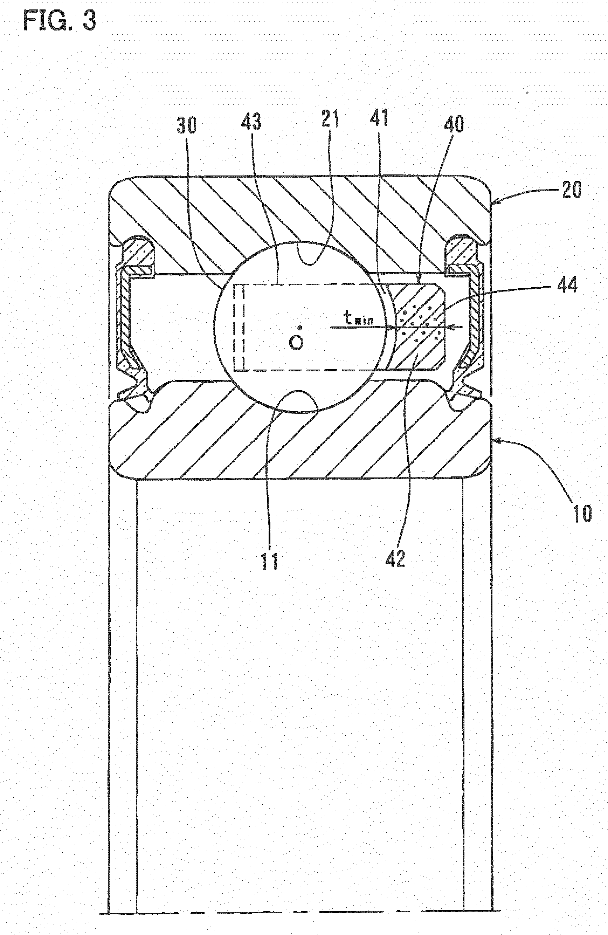

As used herein, "axial direction", "axial", and "axially" refer to the direction of the center axis (not shown) of the rolling bearing; "radial direction", radial", and "radially" refer to a direction perpendicular to the bearing center axis; and "circumferential direction", "circumferential", and "circumferentially" refer to the circumferential direction around the bearing center axis. The right-and-left direction in Fig. 3 corresponds to the axial direction, and the vertical direction in Fig. 3 corresponds to the radial direction. In Figs. 1 and 2, the right-and-left direction corresponds to the circumferential direction, and the vertical direction corresponds to the axial direction.

The rolling elements 30 comprise balls. It is assumed that the number of rolling elements of the rolling bearing of the embodiment is five.

The rolling bearing of the embodiment is a deep-groove ball bearing, i.e., a type of radial bearing, but the present invention is applicable to a roller bearing and a thrust bearing, too.

The retainer 40 includes an annular portion 42 continuously extending over the entire circumference, and a plurality of crossbars 43 extending to one side from the annular portion 42. The respective circumferentially adjacent pairs of crossbars 43 define the pockets 41 therebetween, in which the respective rolling elements 30 are received.

The retainer 40 is made of a resin composition, and is an integral body formed by injection molding.

A resin composition that is higher in compressive strength than in tensile strength is chosen as the resin composition for the retainer 40.

This resin composition contains a synthetic resin (as a base material) and reinforcing fibers 44, and used for injection molding. The reinforcing fibers may be omitted, and the resin composition may contain other modifiers. In Figs. 1 and 3, only portions of the reinforcing fibers 44 in the retainer 40 are shown, and they are shown exaggerated.

The synthetic resin may be any one of a polyamide (PA), polyphenylene sulfide (PPS), and polyetheretherketone (PEEK).

The reinforcing fibers 44 may be either glass fibers or carbon fibers, with the content of the glass fibers or carbon fibers being 10-40% by mass of the entire retainer 40 (i.e., the entire resin composition forming the retainer 40).

In the regions of the annular portion 42 that border the respective pockets 41 and have minimum axial wall thicknesses tₘᵢₙ, the reinforcing fibers 44, comprising glass fibers or carbon fibers, are all oriented in the circumferential direction (that is, there are no radially or axially oriented reinforcing fibers 44).

There are circumferential pocket gaps δ1, δ2, [...] between the respective pockets 41 and the corresponding rolling elements 30. The pocket gaps δ1, δ2, [...] determine the distances by which the respective rolling elements 30 are freely circumferentially movable relative to the retainer 40. In Figs. 1 and 2, the pocket gaps δ1, δ2, [...] are shown exaggerated. Figs. 1 and 2 show developed sectional views taken along the imaginary cylindrical surface including the pitch circle PC that passes through the centers O (see Fig. 3) of the respective rolling elements 30, and Fig. 2 shows the state in which some of the pocket gaps have decreased or disappeared due to the rolling elements 30 moving forward or backward relative to the retainer 40.

As shown in Figs. 1 and 2, the sum of the pocket gaps δ1, δ2, [...] of the respective pockets 41 is smaller than elongation ΔL at break of the resin composition.

The sum of the pocket gaps δ1, δ2, [...] is given by δ1 + δ2 + [...] + δn, where n is the number of pockets 41. Thus, assuming that the number n of pockets 41 is five, and the relation: δ1 = δ2 = [...] = δn is met, elongation ΔL is larger than 5δn.

Elongation ΔL at break of the resin composition can be calculated based on the length of the resin composition in an unstressed state, and the elongation at tensile rupture. The elongation at tensile rupture can be measured by a test under Japan Industrial Standards (JIS) regarding the tensile properties of plastic materials (such as JIS K7161-1).

The kind of synthetic resin used and the content of the reinforcing fibers 44 are chosen according to the strength and elongation ΔL necessary for the retainer 40,

Since this rolling bearing is configured such that the sum of the pocket gaps of the respective pockets 41 is smaller than elongation ΔL at break of the resin composition, even when some of the pocket gaps δ1, δ2, [...] decrease or disappear due to deformation of the retainer 40 as a result of the rolling elements 30 moving forward or backward relative to the retainer 40, no excessive loads are applied to the retainer 40 from the rolling elements 30 (even if some of the pocket gaps disappear (see the first and second pockets 41 from the left in Fig. 2), the corresponding rolling elements 30 are simply sandwiched by the crossbars of the retainer 40 with a light force). Thus, the actual elongation of the resin composition forming the retainer 40 never reaches elongation ΔL at break of the resin composition. Thus, it is possible to prevent damage to the retainer 40 by choosing right materials for the retainer 40 and by properly determining the pocket gaps δ1, δ2, [...], without considering the load on, and the number of revolutions of, the bearing. This means that it is possible to prevent damage to the retainer 40 even if the rolling bearing is used in an unexpected environment regarding the load and the number of revolutions. The rolling bearing according to the present invention can therefore be advantageously used in a high-revolution environment, which is harsh for the retainer 40, and in an unknown use environment.

Since a resin composition that is higher in compressive strength than in tensile strength is chosen as the resin composition for the retainer 40, when designing the retainer 40 to ensure sufficient strength thereof, it is not necessary to consider the resistance to compression and only necessary to consider the resistance to tensile force.

Since the above-described resin composition contains a synthetic resin selected from a polyamide, polyphenylene sulfide, and polyetheretherketone, which are all known to be heat-resistant and oil-resistant materials, this rolling bearing can be used in a wider range of environments regarding the temperature conditions and the kind of lubricating oil used.

Since the resin composition contains 10-40% by mass, based on the entire retainer 40, of glass fibers or carbon fibers, the elongation at break of the resin composition can be set to a favorable value.

In the regions of the annular portion 42 of the retainer 40 that border the respective pockets 41 and have minimum axial wall thicknesses tₘᵢₙ, i.e., the regions which are most likely to be broken, the reinforcing fibers 44, comprising glass fibers or carbon fibers, are all oriented in the circumferential direction. Thus, when forming the retainer 40 by injection molding, the reinforcing fibers 44 are oriented parallel to the direction in which the retainer 40 is deformed (pulled). This prevents the formation of weld portions at the minimum wall thickness portions.

The embodiment disclosed above is a mere example, and should not be understood to restrict the invention in any way. Rather, it should be understood that the present invention covers every modification and alteration of the embodiment that is within the scope of the appended claims, either literally or equivalently.

### DESCRIPTION OF THE REFERENCE NUMERALS

11, 21. Raceway
30. Rolling element
40. Retainer
41. Pocket
42. Annular portion
43. Crossbar
44. Reinforcing fiber

## Claims

1. A rolling bearing comprising a plurality of rolling elements (30) disposed between an inner raceway (11) and an outer raceway (21), and a retainer (40) made of a resin composition, and configured to retain circumferential distances between the rolling elements (30),
wherein the retainer (40) has a plurality of pockets (41) each receiving a respective one of the rolling elements (30), and a circumferential pocket gap (δ) is defined between each of the pockets (41) and a corresponding one of the rolling elements (30),
**characterized in that** the sum of the pocket gaps (δ) is smaller than the elongation at break of the resin composition.

2. The rolling bearing according to claim 1, wherein the resin composition is higher in compressive strength than in tensile strength.

3. The rolling bearing according to claim 1 or 2, wherein the resin composition contains a synthetic resin selected from a polyamide, polyphenylene sulfide, and polyetheretherketone.

4. The rolling bearing according to any of claims 1-3, wherein the retainer (40) contains 10-40% by mass, based on the entire retainer, of glass fibers or carbon fibers.

5. The rolling bearing according to claim 4, wherein the retainer (40) includes an annular portion (42) continuously extending the entire circumference, and a plurality of crossbars (43) extending to one side from the annular portion (42), the pockets (41) are defined between the respective circumferentially adjacent pairs of crossbars (43), the annular portion (42) has regions that border the respective pockets (41) and have minimum axial wall thicknesses (tₘᵢₙ), and the glass fibers or carbon fibers in said regions are all oriented in the circumferential direction.

## Patentansprüche

1. Wälzlager, das eine Vielzahl von Wälzkörpern (30), die zwischen einer inneren Laufbahn (11) und einer äußeren Laufbahn (21) angeordnet sind, sowie einen Käfig (40) umfasst, der aus einer Kunststoffverbindung besteht und zum Aufrechterhalten von Umfangsabständen zwischen den Wälzkörpern (30) eingerichtet ist,
wobei der Käfig (40) eine Vielzahl von Taschen (41) aufweist, die jeweils einen entsprechenden der Wälzkörper (30) aufnehmen, und ein Taschen-Umfangszwischenraum (δ) zwischen jeder der Taschen (41) und einem entsprechenden der Wälzkörper (30) ausgebildet ist,
**dadurch gekennzeichnet, dass** die Summe der Taschen-Zwischenräume (δ) kleiner ist als die Reißdehnung der Kunststoffverbindung.

2. Wälzlager nach Anspruch 1, wobei die Druckfestigkeit der Kunststoffverbindung höher ist als ihre Zugfestigkeit.

3. Wälzlager nach Anspruch 1 oder 2, wobei die Kunststoffverbindung einen Kunststoff enthält, der aus einem Polyamid, Polyphenylensulfid und Polyetheretherketon ausgewählt wird.

4. Wälzlager nach einem der Ansprüche 1-3, wobei der Käfig (40), bezogen auf den gesamten Käfig, 10-40 Masse-% Glasfasern oder Kohlefasern enthält.

5. Wälzlager nach Anspruch 4, wobei der Käfig (40) einen ringförmigen Abschnitt (42), der durchgehend um den gesamten Umfang herum verläuft, sowie eine Vielzahl von Querstreben (43) enthält, die sich von dem ringförmigen Abschnitt (42) aus zu einer Seite erstrecken, wobei die Taschen (41) zwischen den jeweiligen in Umfangsrichtung benachbarten Paaren von Querstreben (43) ausgebildet sind, der ringförmige Abschnitt (42) Bereiche aufweist, die an die jeweiligen Taschen (41) angrenzen und minimale axiale Wanddicken (tₘᵢₙ) haben, und die Glasfasern oder Kohlefasern in den Bereichen alle in der Umfangsrichtung ausgerichtet sind.

## Revendications

1. Palier de roulement comprenant une pluralité d'éléments de roulement (30) disposés entre un chemin de roulement interne (11) et un chemin de roulement externe (21), et une pièce de retenue (40) constituée d'une composition de résine et configurée pour maintenir les distances circonférentielles entre les éléments de roulement (30),
dans lequel la pièce de retenue (40) comporte une pluralité de logements (41) recevant chacun un élément respectif parmi les éléments de roulement (30), et un intervalle de logement circonférentiel (δ) est défini entre chacun des logements (41) et un élément correspondant parmi les éléments de roulement (30),
**caractérisé en ce que** la somme des intervalles de logement (δ) est inférieure à l'allongement à la rupture de la composition de résine.

2. Palier de roulement selon la revendication 1, dans lequel la composition de résine présente une résistance à la compression supérieure à sa résistance à la traction.

3. Palier de roulement selon la revendication 1 ou 2, dans lequel la composition de résine contient une résine synthétique sélectionnée parmi un polyamide, un polysulfure de phénylène et une polyétheréthercétone.

4. Palier de roulement selon l'une quelconque des revendications 1 à 8, dans lequel la pièce de retenue (40) contient de 10 à 40 % en masse, sur base de la pièce de retenue complète, de fibres de verre ou de carbone.

5. Palier de roulement selon la revendication 4, dans lequel la pièce de retenue (40) comprend une portion annulaire (42) qui s'étend de manière continue sur toute la circonférence, et une pluralité d'entretoises (43) qui s'étendent d'un côté de la portion annulaire (42), les logements (41) sont définis entre les paires d'entretoises circonférentiellement adjacentes respectives (43), la portion annulaire (42) comporte des régions qui confinent les logements respectifs (41) et présentent des épaisseurs de paroi axiales minimales (tₘᵢₙ), et les fibres de verre ou de carbone dans lesdites régions sont toutes orientées en direction circonférentielle.
